# EUROPÄISCHE PATENTSCHRIFT

(11) **EP 4 673 343 B1**
(45) Veröffentlichungstag und Bekanntmachung des Hinweises auf die Patenterteilung: **07.10.2026**
(21) Anmeldenummer: 24712409.2
(22) Anmeldetag: 27.02.2024
(51) Int. Cl.: B60T 1/10, B60L 7/10, B60L 7/20, B60L 7/22, B60L 7/24, B60T 13/58, B60T 13/66, B60T 17/22, F16D 61/00

(54) **VORRICHTUNG ZUR ANZEIGE VON VERZÖGERUNGEN EINES BREMSSYSTEMS**
APPARATUS FOR DISPLAYING DECELERATIONS IN A BRAKING SYSTEM
APPAREIL D'AFFICHAGE DE DÉCÉLÉRATIONS DANS UN SYSTÈME DE FREINAGE

(30) Priorität: 02.03.2023 DE 102023000770
(43) Veröffentlichungstag der Anmeldung: 07.01.2026
(73) Patentinhaber: Mercedes-Benz Group AG, 70372 Stuttgart (DE)
(72) Erfinder: DUTKO, Jürgen, 71672 Marbach Am Neckar (DE)
(74) Vertreter: Novagraaf Group
(86) Internationale Anmeldenummer: PCT/EP2024/055012
(87) Internationale Veröffentlichungsnummer: WO 2024/180101

(56) Entgegenhaltungen:
- US-A1- 2002 171 541
- US-A1- 2011 208 381
- US-A1- 2012 179 346
- US-A1- 2013 049 945
- US-B2- 7 409 280
- US-B2- 7 898 405

## Beschreibung

Die Erfindung betrifft eine Vorrichtung zur Anzeige der von einem Betriebsverfahren gesteuerten Verzögerungen eines Bremssystems, welches eine hydraulisch betätigbare Reibbremseinrichtung und eine Rekuperationsbremseinrichtung umfasst, nach der im Oberbegriff von Anspruch 1 näher definierten Art.

Bremssysteme, welche sowohl über eine Reibbremseinrichtung als auch über eine Rekuperationsbremseinrichtung verfügen sind soweit aus dem allgemeinen Stand der Technik bekannt. Sie kommen beispielsweise bei Hybridfahrzeugen oder batterieelektrischen Fahrzeugen zum Einsatz, um zumindest einen Teil der beim Abbremsen anfallenden Energie über die Rekuperationsbremseinrichtung zurückzugewinnen. Im Allgemeinen wird diese Rekuperationsbremseinrichtung über den elektrischen Antriebsmotor des Fahrzeugs gebildet, welcher zum Verzögern des Fahrzeugs als Generator betrieben wird.

Die US 2013/ 049 945 A1 beschreibt eine gattungsgemäße Vorrichtung, um auf benachbarten Balkendiagrammen die Bremswerte der Reibbremseinrichtung und die der Rekuperationsbremseinrichtung benachbart darzustellen.

Zum Stand der Technik kann dabei auf die JP 2007-314100 A verwiesen werden, welche eine Anzeigeinstrument für ein Hybridfahrzeug beschreibt. Dieses kann die Gesamtleistung und das Verhältnis von Elektromotorleistung zu Verbrennungsmotorleistung mittels zweier Zeiger anzeigen.

Die DE 10 2021 114 497 A1 beschreibt eine Bremsanlage für ein Hybridfahrzeug. Die Verteilung der Bremsleistung wird dabei über die Bremspedalstellung mittels eines Aktuator haptisch an eine das Fahrzeug fahrende Person zurückgemeldet.

Die DE 10 2021 205 614 A1 beschreibt ein Verfahren zur Steuerung der Verzögerung eines Kraftfahrzeugs. Die DE 11 2013 006 919 T5 beschreibt eine Regelungsvorrichtung für ein Bremssystem in einem Fahrzeug.

Die DE 10 2016 104 049 A1 beschreibt für ein Fahrzeug mit einer Rekuperationsbremseinrichtung ein Coaching-Verfahren. Dieses umfasst eine grafische Darstellung zwischen einem berechneten (idealen) und einem tatsächlich realisierten Bremsverhalten, um den Nutzer zu schulen. Die WO 201/046733 A1 beschreibt ein ähnliches Verfahren.

Die DE 10 2010 033 517 A1 beschreibt ganz allgemein eine Anzeigevorrichtung für ein Fahrzeug, bei welcher die Skalierung variabel in Abhängigkeit des anzuzeigenden Parameters erfolgt.

In diesem Zusammenhang beschreibt die DE 10 2008 060 265 A1 eine Anzeigevorrichtung für ein zumindest teilweise elektrisch angetriebenes Hybridfahrzeug. Dabei wird im Wesentlichen der Betriebszustand des Hybridsystems visualisiert. Dies betrifft sowohl die Beschleunigung als auch das Abbremsen. Dabei spielt in der Anzeige beim Betriebszustand des Abbremsens auch die Aufteilung zwischen einem rekuperativen Anteil des Bremsens und einem mechanischen Anteil des Bremsens eine Rolle. Um dies zu visualisieren ist in einem Anzeigeinstrument das jeweils fest vorgegebene Verhältnis der beiden Bremsen zueinander eingezeichnet, sodass eine das Kraftfahrzeug fahrende Person erkennen kann, wann sie primär rekuperativ bremst und wann sie primär mit ihrer Reibbremse bremst.

Der Nachteil ist dabei der, dass durch die grafisch fest vorgegebene Aufteilung nicht die tatsächliche Situation visualisiert wird, sondern lediglich eine theoretisch vorgegebene in der aufgedruckten Grafik der Anzeige symbolisierte Situation. Dies kann für eine das Fahrzeug fahrende Person zwar durchaus informativ sein, kann ihr aber nicht helfen ihr Bremsverhalten so zu beeinflussen, dass sie beispielsweise die maximal mögliche Energie durch überwiegend rekuperatives Bremsen zurückgewinnt.

Genau eine solche Information wäre jedoch wünschenswert, um es der das Kraftfahrzeug fahrenden Person zu ermöglichen ihr Bremsverhalten ihren individuellen Wünschen, z.B. nach maximaler Energieeffizienz, entsprechend anzupassen.

Zum weiteren allgemeinen Stand der Technik kann außerdem auf die Schriften US 2002/ 171 541 A1, US 2012/ 179 346 A1 sowie US 7,409,208 A verwiesen werden.

Die Aufgabe der hier vorliegenden Erfindung ist es daher eine verbesserte Vorrichtung zur Anzeige der von einem Betriebsverfahren gesteuerten Verzögerungen eines Bremssystems anzugeben, welche es der Person, welche das Kraftfahrzeug steuert, ermöglicht ihr tatsächliches Bremsverhalten zu erkennen und anzupassen.

Erfindungsgemäß wird diese Aufgabe durch eine Vorrichtung mit den Merkmalen im Anspruch 1 gelöst. Vorteilhafte Ausgestaltungen und Weiterbildungen der erfindungsgemäßen Vorrichtung ergeben sich aus den hiervon abhängigen Unteransprüchen.

Bei der erfindungsgemäßen Vorrichtung ist es vorgesehen, dass eine Recheneinheit und eine Anzeigeeinrichtung zur grafischen Visualisierung des Bremszustands eingesetzt werden, ähnlich wie dies im eingangs genannten Stand der Technik der Fall ist. Erfindungsgemäß ist es nun so, dass die Recheneinheit die Verzögerungen, z.B. als Verzögerungsmomente, von der Reibbremseinrichtung und der Rekuperationsbremseinrichtung empfängt und zur grafischen Darstellung weiterverarbeitet. Dabei ist die Anzeigeeinrichtung dazu eingerichtet die Daten von der Recheneinheit zu empfangen und auf zwei getrennten Skalen die zumindest mittelbar erfasste Verzögerung der Reibbremseinrichtung einerseits und die zumindest mittelbar erfasste Verzögerung der Rekuperationsbremseinrichtung andererseits unabhängig voneinander anzuzeigen.

Über die Recheneinheit werden also Verzögerungen der Reibbremseinrichtung und der Rekuperationsbremseinrichtung entsprechend erfasst. Diese können direkt oder mittelbar erfasst werden, also beispielsweise messtechnisch erfasst werden oder aus entsprechenden Werten eines Beschleunigungssensors und/oder einer Steuerung des Betreibsverfahrens zum Verzögern des Fahrzeugs oder dergleichen zurückgerechnet werden. Die Anzeigeeinrichtung kann nun diese erfassten Verzögerungen der jeweiligen Bremseinrichtung unabhängig voneinander anzeigen. Es existiert also eine erste Skala um die aktuelle Verzögerung der Reibbremseinrichtung anzuzeigen und eine zweite Skala um die aktuelle Verzögerung der Rekuperationsbremseinrichtung anzuzeigen. Der im Stand der Technik existierende feste Zusammenhang bei dem bei einer bestimmten Verzögerung immer ein vordefinierter Anteil von der einen und ein vordefinierter Anteil von der anderen Bremseinrichtung zu kommen scheint, ist hier also zugunsten der tatsächlich erfassten Werte aufgehoben. Hierdurch wird eine die Realität ideal abbildende Darstellung der Verzögerungen des Bremssystems ermöglicht. Die das Fahrzeug fahrende, und in diesem Fall insbesondere abbremsende, Person kann so also immer erkennen, wie genau die Aufteilung der Verzögerungen zwischen den beiden Bremseinrichtungen ist. Der so für die Thematik sensibilisierten, das Fahrzeug fahrenden Person wird damit die Möglichkeit gegeben ihr Bremsverhalten selbst einschätzen zu können, sodass sie beispielsweise möglichst effizient, also mit wenig Beteiligung der Reibbremse, anhalten kann, wenn sie dies wünscht.

Bei der Vorrichtung sind die beiden Skalen dabei in Form von nebeneinander liegenden Balkendiagrammen ausgeführt. Solche Balkendiagramme, welche insbesondere mit derselben Aufteilung des Bremsmoments in die Höhenrichtung gestaltet sein können, können das Verhältnis der beiden Bremseinrichtungen unabhängig voneinander und dennoch visuell sehr einfach vergleichbar miteinander ideal abbilden.

Dabei ist es so, dass die Balken beispielsweise in einer Höhenrichtung realisiert werden können, also mit zunehmenden Bremsmoment beispielsweise von unten nach oben verlaufen, ebenso könnten die Balken seitlich verlaufen also beispielsweise mit zunehmendem Bremsmoment von links nach rechts oder sie könnten in Form von zwei gebogenen Balken, welche nebeneinander verlaufen auch in der Art eines Rundinstruments realisiert werden. Insbesondere bei dieser Ausgestaltung wäre es auch denkbar, dass die Balken aufeinander zu oder insbesondere voneinander weg verlaufen, der eine Balken mit zunehmender Verzögerung also von links nach rechts und der andere Balken von rechts nach links angeordnet ist.

Gemäß der Erfindung ist das Balkendiagramm der Skala zur Anzeige der Verzögerung der Rekuperationsbremseinrichtung in mehrere Teilabschnitte unterteilt ausgebildet, welche jeweils voreingestellten Rekuperationsstufen entsprechen, sodass beispielsweise bei fünf verfügbaren Rekuperationsstufen das Balkendiagramm fünfteilig ausgebildet wäre, wobei je nach Rekuperationsstufe die Anzeige entsprechend der zumindest mittelbar erfassten Verzögerung bis hin zu der eingestellten Rekuperationsstufe als Maximum visualisiert wird.

Eine weitere sehr günstige Ausgestaltung der erfindungsgemäßen Vorrichtung sieht es vor, dass die Recheneinheit dazu eingerichtet ist, den Anteil einer durch die Regelung eines Anti-Blockier-Systems bewirkten Verzögerung zu bestimmen und an die Anzeigeeinrichtung zu übermitteln, die ihrerseits dazu eingerichtet ist, in einem ersten von den Skalen abgesetzten Bereich die Verzögerung im Regelbereich des Anti-Blockier-Systems anzuzeigen. Dieser erste abgesetzte Bereich kann dabei gemäß einer sehr vorteilhaften Ausgestaltung der Vorrichtung eine sich an die Skala zur Anzeige der über die Reibbremseinrichtung erzeugten Verzögerung anschließen. Da das Anti-Blockier-System über die Reibbremseinrichtung arbeitet ist diese Anordnung besonders effizient, da das Anti-Blockier-System und damit eine Verzögerung im Regelbereich des Anti-Blockier-Systems sich typischerweise an die maximale Verzögerung durch die Reibbremseinrichtung anschließt. Der erste Bereich zur Anzeige kann also vorzugsweise die Skala für die Anzeige der Verzögerung durch die Reibbremseinrichtung, welche vorzugsweise als Balkendiagramm ausgebildet sein kann, fortsetzen. Sie kann insbesondere ein abgesetztes auf das Balkendiagramm folgendes Balkensegment sein.

Eine weitere vorteilhafte Ausgestaltung der Vorrichtung gemäß der Erfindung sieht es vor, dass die Recheneinheit dazu eingerichtet ist den Anteil einer in einem vorgegebenen Farbprogramm durch die Rekuperationsbremseinrichtung bewirkten zusätzlichen Verzögerung zu bestimmen und an die Anzeigeeinrichtung zu übermitteln, die ihrerseits dazu eingerichtet ist die durch die Rekuperationsbremseinrichtung erzeugte zusätzliche Verzögerung in einem zweiten von den Skalen abgesetzten Bereich anzuzeigen. Gemäß einer sehr vorteilhaften Weiterbildung hiervon kann dieser zweite abgesetzte Bereich sich insbesondere an die Skala zur Anzeige der über die Rekuperationsbremseinrichtung erzeugten Verzögerung anschließen.

Diese vorteilhafte Ausgestaltung der erfindungsgemäßen Vorrichtung spielt insbesondere dann eine Rolle, wenn in einem vorbestimmten Farbprogramm vergleichsweise sportlich gefahren wird, insbesondere im Bereich einer Rennstrecke, also nicht im öffentlichen Verkehr. Über die Rekuperationsbremseinrichtung lassen sich dann durch das Betriebsverfahren sehr hohe Verzögerungen abrufen, welche für den regulären Verkehr eher ungeeignet sind. Derartige Verzögerungen liegen typischerweise bei mehr als 0,3g was in etwa der maximalen verkehrsüblichen Verzögerung entspricht. Bei stärkeren Verzögerungen könnte die Verkehrssicherheit leiden, weil andere Verkehrsteilnehmer diese nicht erwarten. Beim sportlichen Fahrbetrieb auf einer Rennstrecke sind derartige Verzögerungen jedoch durchaus üblich und werden auch von den anderen Teilnehmern erwartet, sodass hier über die Rekuperationsbremeinrichtung stärkere Verzögerungen als die angesprochenen 0,3g erzeugt werden können. Kommt es zu solchen zusätzlichen Verzögerungen können diese nun in dem eigenen Anzeigebereich, beispielsweise einem Balkensegment, welches sich an die Balkenanzeige der Skala zur Anzeige der über die Rekuperationsbremseinrichtung erzeugten Verzögerung anschließt, angezeigt werden.

Eine vorteilhafte Weiterbildung der erfindungsgemäßen Vorrichtung kann es außerdem vorsehen, dass das Betriebsverfahren es im Falle einer Notbremsung ohne vorherige Rekuperation vorsieht, dass ausschließlich mittels der Reibbremseinrichtung, also ohne Nutzung der Rekuperationsbremseinrichtung verzögert wird, wobei die Anzeigeeinrichtung dazu eingerichtet ist den von der Recheneinheit empfangenen Anteil der durch die Reibbremseinrichtung und den durch die Regelung des Anti-Blockier-Systems bewirkten Anteil an der Verzögerung entsprechend darzustellen. War das Fahrzeug also aktuell ohne Rekuperation unterwegs und es kommt zu einer Notbremsung wird hier auf die Rekuperation verzichtet und dies auch in der Anzeige entsprechend dargestellt zusammen mit der durch die Regelung des Anti-Blockier-Systems bewirkten Verzögerung, welche bei Notbremsungen typischerweise auftritt.

Kommt es dahingehend zu einer Notbremsung mit vorheriger Rekuperation sieht es das Betriebsverfahren entsprechend vor sowohl mit der Reibbremseinrichtung als auch mit der Rekuperationsbremseinrichtung zu verzögern. Dabei ist die Anzeigeeinrichtung dazu eingerichtet den Anteil der durch die Reibbremseinrichtung, den Anteil der durch die Regelung des Anti-Blockier-Systems und den Anteil der durch die Rekuperationsbremseinrichtung bewirkten Verzögerung von der Recheneinheit zu empfangen und darzustellen. Außerdem sind in diesem Fall die beiden Bremseinrichtungen synchronisiert. Die Bremsung wird also mit allen verfügbaren Mitteln durchgeführt. Da bei dieser Notbremsung die Rekuperation vorher bereits aktiv war, kann ihr Einsatz ohne zeitliche Verzögerung erfolgen, sodass die Verzögerungen von beiden Bremseinrichtungen synchronisiert abgerufen werden können.

Im Falle einer Notbremsung mittels der Reibbremseinrichtung beim Betrieb im Regelbereich des Anti-Blockier-Systems und der Rekuperationsbremseinrichtung in dem vorbestimmten Farbprogramm mit zusätzlicher Verzögerung ist es dann gemäß einer sehr günstigen Ausgestaltung der Vorrichtung gemäß der Erfindung vorgesehen, den Anteil der durch die Reibbremseinrichtung, den Anteil im Bereich der Regelung des Anti-Blockier-Systems, den Anteil der durch die Rekuperationsbremseinrichtung sowie den durch die Rekuperationsbremseinrichtung bewirkten zusätzliche Anteil an der Verzögerung von der Recheneinheit an die Anzeigeeinrichtung zu übermittelt und darzustellen. Dabei wird der durch die Regelung des Anti-Blockier-Systems und die zusätzliche Verzögerung bewirkt der Anteil der Bremsverzögerungen in dem ersten und dem zweiten abgesetzten Bereich angezeigt, wobei auch hier die beiden Bremseinrichtungen synchronisiert sind.

Dabei ist es in einer besonders vorteilhaften Ausgestaltung der Vorrichtung gemäß der Erfindung vorgesehen, dass das Betriebsverfahren in jedem Fahrprogram dazu eingerichtet ist, ab einem vorgegebenen maximalen Ladezustand einer mit der Rekuperationsbremseinrichtung verbundenen elektrischen Energiespeichereinrichtung ausschließlich mit der Reibbremseinrichtung zu bremsen. Die Rekuperationsbremseinrichtung wird typischerweise ein Generator sein, insbesondere eine elektrische Antriebsmaschine, welche beim Abbremsen generatorisch betrieben wird. Diese liefert elektrische Leistung, wobei die abgenommene elektrische Leistung proportional zu der erzielbaren Bremsleistung ist. Der abgenommene elektrische Energie kann einerseits aufgebraucht werden, insbesondere wird sie jedoch in einer elektrischen Energiespeichereinrichtung eingespeichert, weil ein unmittelbarer Verbrauch, insbesondere bei einem stärkeren Abbremsen, typischerweise nicht möglich ist. Eine solche elektrische Energiespeichereinrichtung kann typischerweise als Batterie ausgebildet sein. Daneben ist auch die Ausgestaltung in Form von Superkondensatoren oder die Kombination von Superkondensatoren und einer Batterie denkbar. Ist diese elektrische Energiespeichereinrichtung nun jedoch voll oder annährend vollgeladen, kann sie die bei der Rekuperation anfallende elektrische Leistung nicht abnehmen. In diesem Fall sieht das entsprechende Betriebsverfahren vor, dass ausschließlich die Reibbremseinrichtung eingesetzt wird, um das Fahrzeug zu verzögern, sodass keine elektrische Leistung anfällt, welche in dem System nicht abgenommen werden kann.

Eine weitere Ausgestaltung der erfindungsgemäßen Vorrichtung kann es außerdem vorsehen, dass das Betriebsverfahren dazu eingerichtet ist Störgrößen durch die Rekuperationsbremseinrichtung auszuregeln. Der typische Ansatz sieht es hier vor, Störgrößen über die hydraulisch betriebene Reibbremseinrichtung auszuregeln und bei der Rekuperation mit einem geregelten Bremsmoment am Rad abzubremsen. Unter solche Störgrößen fallen letztlich alle Größen, welche dafür sorgen, dass die Radhaftung von der Straße abreißt. Dies können beispielsweise dynamische Radlastverteilungen oder Reibwertunterschiede zwischen den einzelnen Rädern bzw. den einzelnen Bereichen der Straße sein. Dies kann auch Straßenunebenheiten oder Luftdruckunterschiede in den einzelnen Reifen beinhalten. Statt diese wie bisher über einer konstanten Bremsleistung der Rekuperationsbremseinrichtung mit der Reibbremseinrichtung auszuregeln, ist es hier nun also vorgesehen diese direkt über die Rekuperationsbremseinrichtung auszuregeln, sodass ungeachtet dieser auftretenden Störgrößen der Einsatz der Reibbremseinrichtung nicht immer zwingend nötig ist. Dies führt zu einer höheren zurückgewonnen Energiemenge und schont die mechansiche Reibbremseinrichtung, sodass zumindest deren Reibelemente eine längere Lebensdauer haben.

Weitere vorteilhafte Ausgestaltungen der Vorrichtung gemäß der Erfindung und ihrer Nutzung ergeben sich auch aus dem Ausführungsbeispiel, welches nachfolgend unter Bezugnahme auf die Figuren näher beschrieben wird.

Dabei zeigen:
- Fig. 1: ein schematisch angedeutetes Fahrzeug mit einer Vorrichtung gemäß der Erfindung;
- Fig. 2: eine Anzeige in Form von zwei Skalen einer Vorrichtung gemäß der Erfindung in einem möglichen Ausführungsbeispiel, darstellend einen ersten Betriebszustand;
- Fig. 3: eine Darstellung analog zu der in Fig. 2 in einem zweiten Betriebszustand;
- Fig. 4: eine Darstellung analog zu der in Fig. 2 in einem dritten Betriebszustand;
- Fig. 5: eine Darstellung analog zu der in Fig. 2 in einem vierten Betriebszustand;
- Fig. 6: eine Darstellung analog zu der in Fig. 2 in einem fünften Betriebszustand;
- Fig. 7: eine Darstellung analog zu der in Fig. 2 in einem sechsten Betriebszustand;
- Fig. 8: eine Darstellung analog zu der in Fig. 2 in einem siebten Betriebszustand;
- Fig. 9: eine Darstellung analog zu der in Fig. 2 in einem achten Betriebszustand; und
- Fig. 10: ein Schema zur Darstellung der Ausregelung von Störgrößen gemäß dem Stand der Technik und bei der erfindungsgemäßen Vorrichtung.

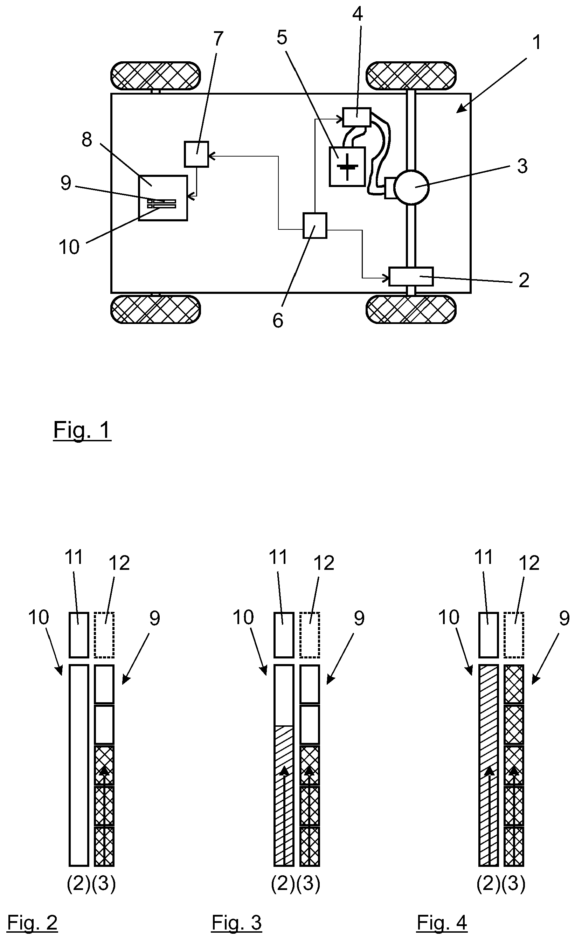

In der Darstellung der Figur 1 ist ein mit 1 bezeichnetes Fahrzeug schematisch angedeutet. Es kann ich hierbei um ein elektrisch angetriebenes Fahrzeug 1 oder um ein Hybridfahrzeug mit zumindest teilweise elektrischem Antrieb handeln. Für die hier vorliegende Vorrichtung ist lediglich relevant, dass das angedeutete Fahrzeug 1 über eine Reibbremseinrichtung 2 verfügt, welche typischerweise als hydraulische Reibbremse realisiert ist. Daneben weist das Fahrzeug 1 eine Rekuperationsbremseinrichtung 3 auf, welche typischerweise durch die elektrische Antriebsmaschine gebildet wird, welche zum Abbremsen des Fahrzeugs 1 als Generator betrieben wird. Diese Rekuperationsbremseinrichtung 3 steht über eine Leistungselektronik 4 mit einer elektrischen Energiespeichereinrichtung 5 in Verbindung. Diese elektrische Energiespeichereinrichtung 5 kann insbesondere als Batterie ausgebildet sein. Auch der Einsatz von sogenannten Superkondensatoren alleine oder in der Kombination mit Batteriemodulen ist hier denkbar.

Zum Abbremsen des Fahrzeugs 1 werden nun typischerweise die beiden Bremseinrichtungen 2, 3 kombiniert eingesetzt. Eine Steuerung 6 koordiniert dieses Brems-Betriebsverfahren. Sie kann gleichzeitig zumindest mittelbar erfasste Bremsmomente bzw. Verzögerungen, welche durch die Reibbremseinrichtung 2 einerseits und die Rekuperationsbremseinrichtung 3 andererseits bewirkt worden sind, an eine Recheneinheit 7 weitergeben, welche dazu eingerichtet ist, die Verzögerungen zu empfangen und zur grafischen Darstellung weiterzuverarbeiten. Eine Anzeigeeinrichtung 8 ist dazu eingerichtet, die Daten von der Recheneinheit 7 zu empfangen und auf zwei getrennten angedeuteten Skalen 9, 10 für die Verzögerung der Reibbremseinrichtung 2 einerseits und der Rekuperationsbremseinrichtung 3 andererseits unabhängig voneinander anzuzeigen.

Diese beiden Skalen 9, 10 sind in den nachfolgenden Figuren 2 ff. für verschiedene Betriebsszenarien nochmals gezeigt. Sie können insbesondere in Form von nebeneinander liegenden Balkendiagrammen, wie hier angedeutet, realisiert sein. Die Balken müssen dabei nicht, wie hier dargestellt, senkrecht ausgerichtet sein, sie könnten auch waagrecht ausgerichtet sein, gebogen dargestellt werden oder dergleichen.

Den Figuren 2 ff. liegt nun jeweils dasselbe Prinzip der Darstellung zugrunde. In der Darstellung jeweils rechts wird durch das Balkendiagramm als Skala 9 die Verzögerung der Rekuperationsbremseinrichtung 3 dargestellt, in dem Balkendiagramm daneben als Skala 10 die diejenige Verzögerung der Reibbremseinrichtung 2. Unterhalb der entsprechenden Skalen 9, 10 sind daher zur Veranschaulichung dieses Sachverhalts die Bezugszeichen 2 und 3 der jeweiligen Bremseinrichtung 2, 3 in Klammer dargestellt.

Dabei ist es so, dass das rechte Balkendiagramm der Skala 9, also die Anzeige der Verzögerung der Rekuperationsbremseinrichtung 3, in mehrere Segmente, hier fünf einzelne Segmente, unterteilt ist. Diese können vorgesehen werden, wenn beispielsweise verschiedene Rekuperationsstufen zur Verfügung stehen. In dem hier dargestellten Ausführungsbeispiel wären dies fünf Rekuperationsstufen. Ein Pfeil innerhalb der jeweiligen Skalen 9, 10 in Figur 2 und den nachfolgenden Figuren soll jeweils anzeigen, dass das Balkendiagramm sich von unten her zunehmend einfärbt bzw. aktiviert wird, im später noch im Detail beschriebenen Sinn, wobei typischerweise jeweils die Maximalstufe dieser Aktivierung dargestellt ist.

Oberhalb der beiden Balkendiagramme der Skalen 9, 10 befinden sich zwei abgesetzte Bereiche 11,12. Auf diese wird später noch im Detail eingegangen.

Der Figur 2 liegt nun ein erstes Szenario zugrunde. Dieses kann beispielsweise sein, dass das Fahrzeug 1 sich in einem ersten Fahrprogramm 1, beispielsweise einem Komfort- und Economyfahrprogramm, befindet. Der zweite Bereich 12 ist in diesem Fahrprogramm nicht notwendig, da er einen in einem solchen Fahrprogramm nicht verfügbare Art der Verzögerung symbolisiert. Er ist deshalb für alle Szenarien in einem solchen Komfort- und Economyfahrprogramm nur gestrichelt angedeutet. Dies betrifft in dem hier dargestellten Beispiel die Figuren 2 bis 6.

In der Figur 2 liegt ein erstes Szenario zugrunde, welches beispielsweise als das Heranrollen an eine rote Ampel oder eine Stoppstelle beschrieben werden kann. Die Bremsung des Fahrzeugs 1 erfolgt während dieses Heranrollens ausschließlich über die Rekuperation, in diesem Fall beispielsweise über die eingestellte Rekuperationsstufe 3, sodass das Balkendiagramm der Skala 9 bis zum dritten Segment die jeweils aktuell anfallende Verzögerung entsprechend des Pfeils von unten nach oben darstellt. Wenn alle 3 segente des Balkendiagramms gefüllt sind, wie hier angedeutet, wäre das die maximale über Rekuperation in der Stufe 3 zu erreichende Verzögernung.

Dieses erste Szenario der Figur 2 wird auch in Figur 3 wieder aufgegriffen. Das Fahrzeug rollt auch hier an eine rote Ampel heran, sodass für das Balkendiagramm der Skala 9 im Wesentlichen das im Rahmen der Figur 2 beschriebene gilt. Zusätzlich wird nun im Balkendiagramm der Skala 10 ein leichtes Hinzubremsen mit der hydraulisch betriebenen Reibbremseinrichtung 2 dargestellt, sodass das Balkendiagramm der Skala 10 sich bis zu einem gewissen Grad, hier in etwa bis zwei Drittel der maximal möglichen Verzögerung, füllt.

In der Darstellung der Figur 4 wäre dieses Szenario so, dass das Fahrzeug in der Rekuperationsstufe 5 entsprechend stärker abbremst und durch ein stärkeres Hinzubremsen mittels der Reibbremseinrichtung 2 vergleichsweise stark verzögert, um noch rechtzeitig vor dem Erreichen der Stoppstelle oder der roten Ampel zum Stehen zu kommen.

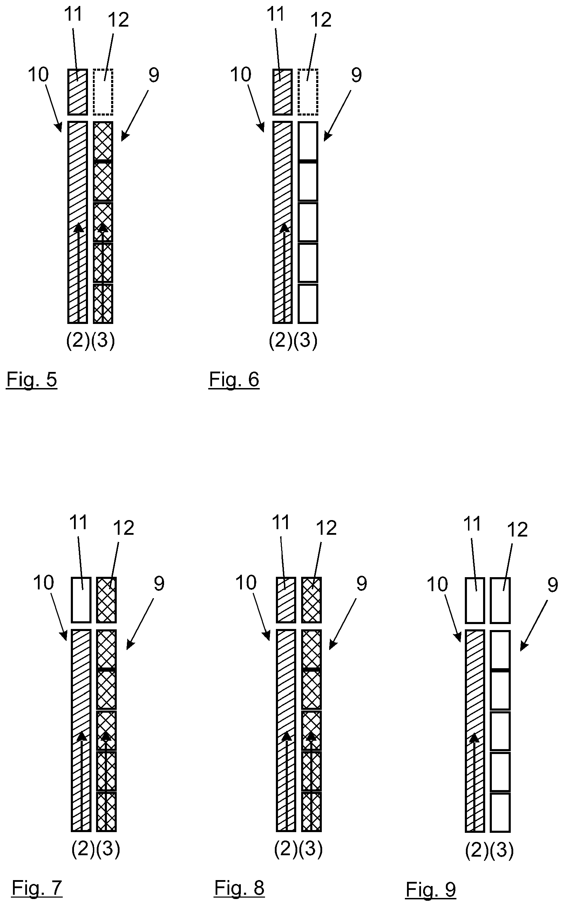

Figur 5 zeigt nun ein Szenario, bei welchem immer stärker gebremst wird, bis hin zur Vollbremsung. Dies könnte beispielsweise dann der Fall sein, wenn eine das Fahrzeug 1 fahrende Person sich bei der Anfahrt an eine Ampel oder Stoppstelle verschätzt hat und kurz vor Ende eine Vollbremsung realisieren muss. In diesem Fall kommt zusätzlich zur maximalen Rekuperation, also der maximalen Verzögerung über Rekuperationsbremseinrichtung 3, die maximale Verzögerung über die Reibbremseinrichtung 2 hinzu. Zusätzlich spricht bei einer solchen Vollbremsung typischerweise ein Anti-Blockier-System (ABS) des Fahrzeugs 1 an. Kommt es zu einer Verzögerung im Regelbereich des Anti-Blockier-Systems wird dies durch den ersten Bereich 11, welcher hier ebenfalls aktiviert angedeutet ist, dargestellt.

Figur 6 zeigt dahingegen eine Situation, in welcher eine vergleichbare Notbremsung stattfindet, ohne dass zuvor die Rekuperationsbremseinrichtung 3 aktiv war. In diesem Fall wird die gesamte Bremsleistung über die Reibbremseinrichtung 2 einschließlich einer Verzögerung im Regelbereich des Anti-Blockier-Systems aufgebracht, ohne das die Rekuperationsbremseinrichtung 3 eingesetzt wird, der elektrische Antriebsmotor also als Generator hochgefahren wird. Dies dient zur Realisierung einer schnellen Notbremsung und vermeidet den Zeitaufwand zum hochfahren der hier noch nicht aktiven Rekuperationsbremseinreichtung 3.

In den bisherigen Figuren 2 bis 6 war dabei immer ein auf Komfort und Effizienz ausgerichtetes Fahrprogramm die Grundlage für das Betriebsverfahren des Bremssystems. Dementsprechend war, wie oben angedeutet, der zweite Bereich 12 inaktiv und dementsprechend gestrichelt dargestellt. Dieser zweite Bereich 12 kann nun aktiv genutzt werden, wenn das Fahrzeug 1 in einem auf Sportlichkeit getrimmten Fahrprogramm genutzt wird, insbesondere in einem auf Rennstrecken zum Einsatz kommenden Fahrprogramm. In der Praxis ist es nämlich so, dass im regulären Verkehr Verzögerungen bis 0,3g als üblich und sicher eingeschätzt werden. Normale Fahrprogramme begrenzen deshalb die maximale Verzögerung auf eben diesen 0,3g. Stärkere Verzögerungen sind allenfalls bei einer Notbremsung zu realisieren, welche dann typischerweise über das die Reibbremseinrichtung 2 mit voller Bremsleistung einschließlich der Verzögerung im Regelbereich der Anti-Blockier-Systems erfolgt, wie es oben im Rahmen der Figuren 5 und 6 beschrieben worden ist.

Bei den Figuren 7 und 8 soll nun also ein vorbestimmtes Fahrprogramm im sportlichen Bereich, insbesondere für den Einsatz auf Rennstrecken, zugrunde liegen. Hier kann über die Rekuperationsbremseinrichtung 3 eine zusätzliche Verzögerung abgerufen werden, welche die Gesamtverzögerung der Rekuperationsbremseinrichtung über die 0,3g hebt, was beim Einsatz, insbesondere auf Rennstrecken, durchaus sinnvoll und üblich ist, und in einer solchen Situation auch von den weiteren Teilnehmern an derartigen Rennen erwartet wird, sodass von einer derart starken Verzögerung über die Rekuperationsbremseinrichtung 3 keine Gefahr für andere ausgeht. Diese zusätzliche Verzögerung wird, wenn sie denn abgerufen wird, über den zweiten Bereich 12 visualisiert, was in den beiden in den Figuren 7 und 8 dargestellten Szenarien der Fall ist.

In der Darstellung der Figur 7 ist es nun so, dass das zugrunde liegende Szenario ein starkes Abbremsen vor einer scharfen Kurve ist. Die Rekuperationsbremseinrichtung 3 wird dabei zunehmend hochgefahren, einschließlich ihres zusätzlichen Verzögerungsbereichs, sodass das gesamte Balkendiagramm der Skala 9 einschließlich des zweiten Bereichs 12 aktiviert ist. Die Reibbremseinrichtung 2 wird dann bis hin zu ihrem Maximum ohne das Anti-Blockier-System ausgenutzt, wie es auch hier wiederum durch die Pfeile in den beiden Balkendiagrammen der Skalen 9 und 10 angedeutet ist.

Das in Figur 8 dargestellte Szenario legt nun zusätzlich eine Vollbremsung zugrunde, sodass zusätzlich zur vollen Bremsleistung der Rekuperationsbremseinrichtung 3, einschließlich der zusätzlichen nur in diesem Fahrprogramm verfügbaren Verzögerung gemäß der Anzeige im zweiten Bereich 12 die Verzögerung der Reibbremseinrichtung 2 so hoch wird, dass die Regelung des Anti-Blockier-Systems anspricht und damit auch der erste Bereich 11 entsprechend aktiviert wird.

Abschließend soll in der Darstellung der Figur 9 ein Szenario dargestellt werden, welches für alle Fahrprogramme entsprechend möglich ist, sodass hier der zweite Bereich 12 sowohl vorhanden als auch nicht vorhanden sein kann. In diesem Szenario ist die Situation die, dass die elektrische Energiespeichereinrichtung 5 des Fahrzeugs 1 voll oder annähernd vollgeladen ist. Für den Fall eines Abbremsens mit der Rekuperationsbremseinrichtung 3 besteht also keine Möglichkeit, die anfallende elektrische Leistung in der elektrischen Energiespeichereinrichtung 5 einzuspeichern. In diesem Fall sorgt die Steuerung 6 für das Betriebsverfahren dafür, dass ausschließlich mit der Reibbremseinrichtung 2 gebremst wird, die Bremsung über die Rekuperationsbremseinrichtung 3 entfällt also so lange, bis der Ladezustand der elektrischen Energiespeichereinrichtung 5 wieder die Aufnahme von beim Abbremsen anfallender elektrischer Leistung ermöglicht.

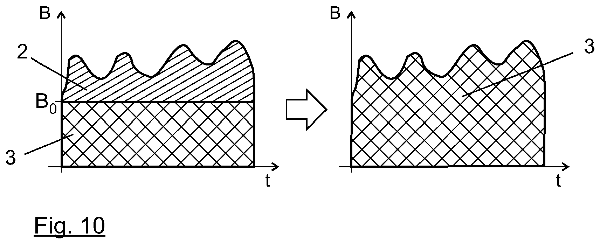

In der Darstellung der Figur 10 sind nun zwei einzelne Diagramme gezeigt, welche jeweils das Radbremsmoment, welches hier mit B bezeichnet ist, über der Zeit t beim Abbremsen des Fahrzeugs 1 darstellen. Das Diagramm in der Figur 10 links zeigt dabei den üblichen Zustand, wie er gemäß dem Stand der Technik umgesetzt wird. Das über die Steuerung 6 veranlasste Betriebsverfahren würde in diesem Fall so funktionieren, dass bei Anforderung einer bestimmten Bremsleistung zuerst über die Rekuperationsbremseinrichtung 3 ein konstantes Radbremsmoment B₀ zur Verfügung gestellt wird. Kommt es nun zu irgendwelchen Störgrößen, welche den Reibwert des Reifens gegenüber der Oberfläche der Straße verändern, sei es ein veränderter Untergrund, Feuchtigkeit, eine Pfütze, unterschiedlicher Luftdruck in verschiedenen Reifen des Fahrzeugs 1 oder dergleichen, dann werden diese Störgrößen durch eine Ansteuerung der Reibbremseinrichtung 2 ausgeglichen. Dies ist durch den oberen Teil im Diagramm der Figur 10 dargestellt, wobei der Anteil des Radbremsmoments B über der Zeit t, welcher durch die Reibbremseinrichtung 2 bereitgestellt wird, schraffiert angedeutet ist. Da die bei der Ausregelung der Störgrößen anfallende Bremsleistung der Reibbremseinrichtung 2 vollständig verloren geht, stellt dies einen hinsichtlich der Energieeffizienz und des Verschleiß' der Reibelemente nachteiligen Ansatz dar.

Bei der verbesserten Lösung in der Figur 10 rechts ist nun die Steuerung 6 dazu eingerichtet, den Ausgleich der Störgrößen über die Rekuperationsbremseinrichtung 3 entsprechend vorzunehmen. Damit wird also die gesamte Bremsleistung bei den Situationen, bei denen auf die Reibbremseinrichtung 2 verzichtet werden kann, einschließlich der Ausregelung eventueller Störgrößen, durch die Rekuperationsbremseinrichtung 3 bereitgestellt. Dementsprechend ist hier die gesamte Fläche des Diagramms, welche wiederum mit 3 bezeichnet ist, kreuzschraffiert dargestellt, das zugehörige Radbremsmoment B wie wird also ausschließlich durch die Rekuperationsbremseinrichtung 3 zur Verfügung gestellt und über diese werden auch die Störgrößen ausgeregelt.

## Patentansprüche

1. Vorrichtung zur Anzeige der von einem Betriebsverfahren gesteuerten Verzögerungen eines Bremssystems, welches eine hydraulisch betätigbare Reibbremseinrichtung (2) und eine Rekuperationsbremseinrichtung (3) umfasst, mit einer Recheneinheit (7) und einer Anzeigeeinrichtung (8) zur grafischen Visualisierung des aktuellen Bremszustandes, wobei die Recheneinheit (7) Verzögerungen von der Reibbremseinrichtung (2) und der Rekuperationsbremseinrichtung (3) empfängt und zur graphischen Darstellung weiterverarbeitet, wobei die Anzeigeeinrichtung (8) dazu eingerichtet ist, die Daten zur Verzögerung von der Recheneinheit (7) zu empfangen, wobei die Anzeigeeinrichtung (8) ferner dazu eingerichtet ist, die Daten auf zwei getrennten Skalen (9, 10) die zumindest mittelbar erfasste Verzögerung der Reibbremseinrichtung (2) einerseits und die zumindest mittelbar erfasste Verzögerung der Rekuperationsbremseinrichtung (3) andererseits unabhängig voneinander anzuzeigen, und wobei
die Skalen (9, 10) in Form von nebeneinander liegenden Balkendiagrammen ausgeführt sind,
**dadurch gekennzeichnet, dass**
die Skala (9) mit dem Balkendiagramm zur Anzeige der Verzögerung der Rekuperationsbremseinrichtung (3) bei einstellbaren Rekuperationsstufen in eine Anzahl von getrennten Segmenten aufgeteilt ist, welche der Anzahl von Rekuperationsstufen entsprechen.

2. Vorrichtung nach Anspruch 1,
**dadurch gekennzeichnet, dass**
die Recheneinheit (7) dazu eingerichtet ist, den Anteil einer durch die Regelung eines Anti-Blockier-Systems bewirkten Verzögerung zu bestimmen und an die Anzeigeeinrichtung (8) zu übermitteln, die dazu eingerichtet ist, in einem ersten von den Skalen (9, 10) abgesetzten Bereich (11) die Verzögerung im Regelbereich des Anti-Blockier-Systems anzuzeigen.

3. Vorrichtung nach Anspruch 2,
**dadurch gekennzeichnet, dass**
der erste abgesetzte Bereich (11) sich an die Skala (10) zur Anzeige der über die Reibbremseinrichtung (2) erzeugten Verzögerung anschließt.

4. Vorrichtung nach einem der Ansprüche 1 bis 3,
**dadurch gekennzeichnet, dass**
die Recheneinheit (7) dazu eingerichtet ist, den Anteil einer in einem vorgegebenen Fahrprogramm durch die Rekuperationsbremseinrichtung (3) bewirkten zusätzlichen Verzögerung zu bestimmen und an die Anzeigeeinrichtung (8) zu übermitteln, die dazu eingerichtet ist, die durch die Rekuperationsbremseinrichtung (3) erzeugte zusätzliche Verzögerung in einem zweiten von den Skalen (9, 10) abgesetzten Bereich (12) anzuzeigen.

5. Vorrichtung nach Anspruch 4,
**dadurch gekennzeichnet, dass**
der zweite abgesetzte Bereich (12) sich an die Skala (9) zur Anzeige der über die Rekuperationsbremseinrichtung (3) erzeugten Verzögerung anschließt.

6. Vorrichtung nach einem der Ansprüche 1 bis 5,
**dadurch gekennzeichnet, dass**
eine Steuerung (6) für das Betriebsverfahren im Falle einer Notbremsung ohne vorherige Rekuperation dazu eingerichtet ist, ausschließlich mittels der Reibbremseinrichtung (2) zu verzögern, wobei die Anzeigeeinrichtung (8) dazu eingerichtet ist, den von der Recheneinheit (7) empfangenen Anteil der durch die Reibbremseinrichtung (2) verursachten Verzögerung und den Anteil der Verzögerung im Regelbereich des Anti-Blockier-Systems darzustellen.

7. Vorrichtung nach einem der Ansprüche 1 bis 5,
**dadurch gekennzeichnet, dass**
die Steuerung (6) für das Betriebsverfahren dazu eingerichtet ist, im Falle einer Notbremsung mit vorheriger Rekuperation mittels der Reibbremseinrichtung (2) und der Rekuperationsbremseinrichtung (3) zu verzögern, wobei die Anzeigeeinrichtung dazu eingerichtet ist, den Anteil der durch die Reibbremseinrichtung (2) bewirkten Verzögerung, den Anteil der Verzögerung im Regelbereich des Anti-Blockier-Systems und den Anteil der durch die Rekuperationsbremseinrichtung (3) bewirkten Verzögerung von der Recheneinheit (7) zu empfangen und darzustellen, wobei die beiden Bremseinrichtungen (2, 3) synchronisiert sind.

8. Vorrichtung nach einem der Ansprüche 4 bis 7,
**dadurch gekennzeichnet, dass**
die Steuerung (6) für das Betriebsverfahren dazu eingerichtet ist, im Falle einer Notbremsung in dem vorbestimmten Fahrprogramm mittels der Reibbremseinrichtung (2) und der Rekuperationsbremseinrichtung (3) zu verzögern, wobei die Anzeigeeinrichtung dazu eingerichtet ist, den Anteil der durch die Reibbremseinrichtung (2) bewirkten Verzögerung, den Anteil der Verzögerung im Regelbereich des Anti-Blockier-Systems, den Anteil der durch die Rekuperationsbremseinrichtung (3) aufgebrachten Verzögerung und den Anteil der durch die Rekuperationsbremseinrichtung (3) aufgebrachten zusätzlichen Verzögerung von der Recheneinheit (7) zu empfangen und darzustellen, wobei die von der Reibbremseinrichtung (2) im Regelbereich des Anti-Blockier-Systems und die zusätzliche Verzögerung der Rekuperationsbremseinrichtung (3) in dem ersten und dem zweiten abgesetzten Bereich (11, 12) dargestellt sind, und wobei die beiden Bremseinrichtungen (2, 3) synchronisiert sind.

9. Vorrichtung nach einem der Ansprüche 1 bis 8,
**dadurch gekennzeichnet, dass**
die Steuerung (6) für das Betriebsverfahren dazu eingerichtet ist, ab einem vorgegebenen maximalen Ladezustand eines mit der Rekuperationsbremseinrichtung (3) verbundenen elektrischen Energiespeichereinrichtung (5) ausschließlich mit der Reibbremseinrichtung (2) zu verzögern.

10. Vorrichtung nach einem der Ansprüche 1 bis 9,
**dadurch gekennzeichnet, dass**
die Steuerung (6) des Betriebsverfahrens dazu eingerichtet ist, Störgrößen durch die Rekuperationsbremseinrichtung (3) auszuregeln.

## Claims

1. Device for displaying the decelerations, which are controlled by an operating method, of a braking system which comprises a hydraulically actuatable friction braking apparatus (2) and a regenerative braking apparatus (3), the device having a computing unit (7) and a display apparatus (8) for graphically visualizing the current braking state, wherein the computing unit (7) receives decelerations from the friction braking apparatus (2) and the regenerative braking apparatus (3) and processes them further in order for them to be graphically displayed, wherein the display apparatus (8) is configured to receive the data relating to the deceleration from the computing unit (7), wherein the display apparatus (8) is further configured to display the data independently of each other on two separate scales (9, 10) the at least indirectly detected deceleration of the friction braking apparatus (2) on the one hand and the at least indirectly detected deceleration of the regenerative braking apparatus (3) on the other hand, and wherein
the scales (9, 10) are presented in the form of bar charts which are next to each other,
**characterized in that**
the scale (9) with the bar chart for displaying the deceleration by the regenerative braking apparatus (3) is divided at settable regeneration levels into a number of separate segments which correspond to the number of regeneration levels.

2. Device according to claim 1,
**characterized in that**
the computing unit (7) is configured to determine the proportion of a deceleration brought about by the control of an anti-lock braking system and to transmit it to the display apparatus (8) which is configured to display the deceleration in the control range of the anti-lock braking system in a first region (11) remote from the scales (9, 10).

3. Device according to claim 2,
**characterized in that**
the first remote region (11) is adjacent to the scale (10) for displaying the deceleration generated via the friction braking apparatus (2).

4. Device according to any of claims 1 to 3,
**characterized in that**
the computing unit (7) is configured to determine the proportion of an additional deceleration brought about by the regenerative braking apparatus (3) in a specified driving program and to transmit it to the display apparatus (8) which is configured to display the additional deceleration generated by the regenerative braking apparatus (3) in a second region (12) remote from the scales (9, 10).

5. Device according to claim 4,
**characterized in that**
the second remote region (12) is adjacent to the scale (9) for displaying the deceleration generated via the regenerative braking apparatus (3).

6. Device according to any of claims 1 to 5,
**characterized in that**
a control unit (6) for the operating method is configured, in the event of emergency braking without prior regeneration, to decelerate exclusively by means of the friction braking apparatus (2), wherein the display apparatus (8) is configured to display the proportion, received by the computing unit (7), of the deceleration caused by the friction braking apparatus (2) and the proportion of the deceleration in the control range of the anti-lock braking system.

7. Device according to any of claims 1 to 5,
**characterized in that**
the control unit (6) for the operating method is configured to decelerate, in the event of emergency braking with prior regeneration, by means of the friction braking apparatus (2) and the regenerative braking apparatus (3), wherein the display apparatus is configured to receive from the computing unit (7) and to display the proportion of the deceleration brought about by the friction braking apparatus (2), the proportion of the deceleration in the control range of the anti-lock braking system, and the proportion of the deceleration brought about by the regenerative braking apparatus (3), wherein the two braking apparatuses (2, 3) are synchronized.

8. Device according to any of claims 4 to 7,
**characterized in that**
the control unit (6) for the operating method is configured to decelerate, in the event of emergency braking in the predetermined driving program, by means of the friction braking apparatus (2) and the regenerative braking apparatus (3), wherein the display apparatus is configured to receive from the computing unit (7) and to display the proportion of the deceleration brought about by the friction braking apparatus (2), the proportion of the deceleration in the control range of the anti-lock braking system, the proportion of deceleration applied by the regenerative braking apparatus (3), and the proportion of the additional deceleration applied by the regenerative braking apparatus (3), wherein the deceleration by the friction braking apparatus (2) in the control range of the anti-lock braking system and the additional deceleration of the regenerative braking apparatus (3) are displayed in the first and the second remote region (11, 12), and wherein the two braking apparatuses (2, 3) are synchronized.

9. Device according to any of claims 1 to 8,
**characterized in that**
the control unit (6) for the operating method is configured to decelerate exclusively using the friction braking system (2) from a specified maximum state of charge of an electrical energy storage apparatus (5) connected to the regenerative braking system (3).

10. Device according to any of claims 1 to 9,
**characterized in that**
the control unit (6) of the operating method is configured to correct disturbance variables using the regenerative braking apparatus (3).

## Revendications

1. Dispositif destiné à afficher les décélérations d'un système de freinage, commandées par un mode de fonctionnement, lequel système de freinage comprend un mécanisme de freinage par friction (2) à commande hydraulique et un mécanisme de freinage à récupération (3), comportant une unité de calcul (7) et un moyen d'affichage (8) pour la visualisation graphique de l'état de freinage actuel, dans lequel l'unité de calcul (7) reçoit des décélérations provenant du mécanisme de freinage par friction (2) et du mécanisme de freinage à récupération (3) et les traite en vue de leur affichage graphique, dans lequel le moyen d'affichage (8) est configuré pour recevoir les données pour la décélération provenant de l'unité de calcul (7), dans lequel le moyen d'affichage (8) est en outre configuré pour afficher les données sur deux échelles (9, 10) distinctes pour la décélération au moins indirectement mesurée du mécanisme de freinage par friction (2) d'une part et pour la décélération au moins indirectement mesurée du mécanisme de freinage à récupération (3) d'autre part, et dans lequel
les échelles (9, 10) se présentent sous la forme de diagrammes en bâtons juxtaposés,
**caractérisé en ce que**
l'échelle (9) comportant le diagramme en bâtons pour l'affichage de la décélération du mécanisme de freinage à récupération (3) pour des niveaux de récupération réglables est divisée en un certain nombre de segments distincts, lesquels correspondent au nombre de niveaux de récupération.

2. Dispositif selon la revendication 1,
**caractérisé en ce que**
l'unité de calcul (7) est configurée pour déterminer la proportion d'une décélération provoquée par la régulation d'un système antiblocage et pour la transmettre au moyen d'affichage (8), qui est configuré pour afficher, dans une première zone (11) décalée des échelles (9, 10), la décélération dans la plage de régulation du système antiblocage.

3. Dispositif selon la revendication 2,
**caractérisé en ce que**
la première zone (11) décalée se raccorde à l'échelle (10) pour l'affichage de la décélération générée par l'intermédiaire du mécanisme de freinage par friction (2).

4. Dispositif selon l'une des revendications 1 à 3,
**caractérisé en ce que**
l'unité de calcul (7) est configurée pour déterminer la proportion d'une décélération supplémentaire provoquée par le mécanisme de freinage à récupération (3) dans un programme de conduite prédéfini et de la transmettre au moyen d'affichage (8) qui est configuré pour afficher la décélération supplémentaire générée par le mécanisme de freinage à récupération (3) dans une seconde zone (12) décalée des échelles (9, 10).

5. Dispositif selon la revendication 4,
**caractérisé en ce que**
la seconde zone (12) décalée se raccorde à l'échelle (9) pour l'affichage de la décélération générée par l'intermédiaire du mécanisme de freinage à récupération (3).

6. Dispositif selon l'une des revendications 1 à 5,
**caractérisé en ce**
**qu'**une commande (6) pour le mode de fonctionnement en cas de freinage d'urgence sans récupération préalable est configurée pour décélérer exclusivement à l'aide du mécanisme de freinage par friction (2), dans lequel le moyen d'affichage (8) est configuré pour présenter la proportion de la décélération provoquée par le mécanisme de freinage par friction (2), reçue de l'unité de calcul (7), et la proportion de la décélération se situant dans la plage de régulation du système antiblocage.

7. Dispositif selon l'une des revendications 1 à 5,
**caractérisé en ce que**
la commande (6) pour le mode de fonctionnement est configurée pour décélérer en cas de freinage d'urgence avec récupération préalable à l'aide du mécanisme de freinage par friction (2) et du mécanisme de freinage à récupération (3), dans lequel le moyen d'affichage est configuré pour recevoir, en provenance de l'unité de calcul (7), la proportion de la décélération provoquée par le mécanisme de freinage par friction (2), la proportion de la décélération se situant dans la plage de régulation du système antiblocage et la proportion de la décélération provoquée par le mécanisme de freinage à récupération (3) et pour les afficher, dans lequel les deux mécanismes de freinage (2, 3) sont synchronisés.

8. Dispositif selon l'une des revendications 4 à 7,
**caractérisé en ce que**
la commande (6) pour le mode de fonctionnement est configurée pour décélérer, en cas de freinage d'urgence dans le programme de conduite prédéfini, à l'aide du mécanisme de freinage par friction (2) et du mécanisme de freinage à récupération (3), dans lequel le moyen d'affichage est configuré pour recevoir, en provenance de l'unité de calcul (7), la proportion de la décélération provoquée par le mécanisme de freinage par friction (2), la proportion de la décélération se situant dans la plage de régulation du système antiblocage, la proportion de la décélération appliquée par le mécanisme de freinage à récupération (3) et la proportion de la décélération supplémentaire appliquée par le mécanisme de freinage à récupération (3), et pour les afficher, dans lequel la décélération produite par le mécanisme de freinage par friction (2) dans la plage de régulation du système antiblocage et la décélération supplémentaire du mécanisme de freinage à récupération (3) sont affichées dans les première et seconde zones (11, 12) décalées, et dans lequel les deux mécanismes de freinage (2, 3) sont synchronisés.

9. Dispositif selon l'une des revendications 1 à 8,
**caractérisé en ce que**
la commande (6) pour le mode de fonctionnement est configurée pour, à partir d'un état de charge maximal prédéfini d'un moyen de stockage d'énergie (5) électrique relié au mécanisme de freinage à récupération (3), décélérer exclusivement à l'aide du mécanisme de freinage par friction (2).

10. Dispositif selon l'une des revendications 1 à 9,
**caractérisé en ce que**
la commande (6) du mode de fonctionnement est configurée pour compenser les perturbations au moyen du mécanisme de freinage à récupération (3).
